# EUROPEAN PATENT APPLICATION

(11) **EP 1 195 941 A1**
(43) Date of publication of application: **10.04.2002**
(21) Application number: 01936978.4
(22) Date of filing: 12.06.2001
(51) Int. Cl.: H04L 12/00

(54) **Communication method and communication system**

(30) Priority: 28.07.2000 JP 2000229652
(71) Applicant: MITSUBISHI DENKI KABUSHIKI KAISHA, Tokyo 100-8310 (JP)
(72) Inventor: FUJII, Teruko, Tokyo 100-8310 (JP); BABA, Yoshimasa, Tokyo 100-8310 (JP); NAGASHIMA, Yasuyuki, Tokyo 100-8310 (JP); KATO, Masataka, Tokyo 100-8310 (JP)
(74) Representative: Pfenning, Meinig & Partner
(86) International application number: JP0104974
(87) International publication number: WO0211370

(57) **Abstract**

The communication system conducts communication among nodes N1 to N4 that form a communication network of bus type by using set communication parameters. The communication system includes one master node N1 selected from among the nodes N1 to N4; and one or more slave nodes N2 to N4 that are nodes N2 to N4 other than the master node N1, the one or more slave nodes logically star-connected to the master node N1, each of the one or more slave nodes conducting communication with another node N2 to N4 via the master node N1 by using communication parameters negotiated with the master node N1.

## Description

### TECHNICAL FIELD

The present invention relates to a communication method and a communication system capable of conducting communication between nodes efficiently, in a communication system having transmission quality that differs according to a position at which a communication device (node) is connected, such as a communication system in which a node is connected to a communication line such as an electric power line.

### BACKGROUND ART

In recent years, attention has been paid to "electric power line modems" for conducting communication by utilizing existing power lines (also called electric light lines) without installing new communication facilities in order to reduce the cost and utilize the existing facilities efficiently. By incorporating electric products disposed inside and outside homes and in buildings, factories, and stores connected by power lines into a network, various kinds of processing, such as control of these products and data communication, can be conducted by means of the power line modems.

Furthermore, as wired digital communication other than such a network of the electric products, i.e., as network communication using a plurality of multi-connected power line modems disposed outside houses, Internet communication using personal computers can be mentioned.

As such a communication system using the power lines, there are described, for example, a wired system on a distribution network of low tension or medium tension and a data packet transmission method in Japanese Patent Application Laid-Open (JP-A) No. 2-28743. In the data packet transmission method, a master station determines a data route with respect to a subscriber station on the basis of notified transmission quality, and data packets are transmitted according to the determined data route. In the data packet transmission method, disturbance relating to the place or time is thus avoided, and highly reliable communication is made possible.

In JP-A No. 56-149140, there is disclosed a data transmission control method and its device relating to a ring-shaped network and capable of dividing one network topology into two networks and improving the use efficiency of the entire network in the case where a node to be communicated with exists at a great distance.

In the above described communication using the power line, however, there occurs a great difference in transmission quality between nodes connected to the power line according to environments, such as electric products connected to the power line, though the nodes are connected to the same power line. Even in the case where data having the same data length are transmitted, the difference in transmission quality causes a great delay difference in data transmission. This results in a problem that respective nodes cannot conduct communication in optimum states.

Especially for implementing fast communication, it is necessary to conduct optimum setting individually of various communication parameters, such as the frequency band to be used on the power line, transmission rate, and error correction system, between nodes. However, nodes connected to the power line basically conduct point-to-point communication. Therefore, it is necessary to conduct negotiation for setting communication parameters for all node pairs. Since this negotiation needs to be conducted for all node pairs, there is a problem that the processing time for conducting the negotiation becomes long.

In addition, the environment of the power line changes dynamically. Therefore, it is necessary to alter and set the communication parameters as well between nodes one after another. There is also a problem that the burden of this communication management is also great.

Furthermore, if the number of nodes connected to the power line is increased, the load of the above described negotiation and communication management cannot be ignored. This results in a problem that the communication efficiency is lowered as the number of nodes is increased.

Therefore, an object of the present invention is to provide a communication method and a communication system capable of shortening the time required for negotiation between nodes, then lightening the burden of the communication management, and maintaining a favorable communication state for each node even if the number of nodes is increased, in the case where a plurality of nodes conduct point-to-point communication by using a communication line that is relatively poor, such as a power line.

### DISCLOSURE OF THE INVENTION

The communication method according to one aspect of this invention comprises a designation step of designating any one of the nodes as a master node, designating other nodes as slave nodes, and forming a logical star connection; a determination step of determining communication parameters between the master node and respective slave nodes; and a communication step of conducting communication between slave nodes via the master node by using communication parameters determined by the determination step.

According to the above-mentioned aspect, any one of the nodes is designated as a master node and other nodes are designated as slave nodes, and a logical star connection is formed by the designation step. Communication parameters between the master node and respective slave nodes are determined by the determination step. At the communication step, communication between slave nodes is conducted via the master node by using communication parameters determined by the determination step.

The communication method further comprises an alteration step in which the master node monitors communication states between the master node and at least one.of the slave nodes and alters successively communication parameters between the master node and the at least one of the slave nodes.

Thus, the master node monitors communication states between the master node and at least one of the slave nodes and alters successively communication parameters between the master node and the at least one of the slave nodes by using the alteration step.

The communication method according to an another aspect of this invention comprises: an initial step of designating a node that would become best in transmission quality when a logical star connection with other nodes were conducted, as a master node based on transmission qualities between nodes, designating other nodes as slave nodes, and star-connecting the nodes logically; and an alteration step, responsive to existence of such a node that would become best in transmission quality when logical star connections with other nodes were conducted in response to connection of a new node or a change of a communication state, of altering the node to a master node and altering a current master node to a slave node.

According to the above-mentioned aspect, a node that would become best in transmission quality when a logical star connection with other nodes were conducted is designated as a master node based on transmission qualities between nodes, other nodes are designated as slave nodes, and the nodes are star-connected logically, by the initial step. If there exists such a node that would become best in transmission quality when logical star connections with other nodes were conducted in response to connection of a new node or a change of a communication state, then the node is altered to a master node and a current master node is altered to a slave node by the alteration step.

In the communication method, the alteration step includes transfer step of transferring communication parameters among all nodes inclusive of the current master node held by the current master node to a master node after alteration.

Thus, communication parameters among all nodes inclusive of the current master node held by the current master node are transferred by the transfer step of the alteration step.

In the communication method, the alteration step includes notice step in which the master node after alteration sends a notice to the effect that its own master node has been altered to the master node, to other nodes.

Thus, the master node after alteration sends a notice to the effect that its own master node has been altered to the master node, to other nodes by using the notice step of the alteration step.

In the communication method, the initial step includes: a first designation step of designating a node first connected to the communication network as a master node; a second designation step of designating a node secondly connected to the communication network as a first slave node; a first negotiation step of determining communication parameters between the master node and the first slave node; a third designation step of designating a node thirdly connected to the communication network as a second slave node; a second negotiation step of determining communication parameters between the master node and the second slave node and communication parameters between the first slave node and the second slave node; an acquisition step in which the master node acquires the communication parameters between the first slave node and the second slave node; an alteration and designation step in which the master node designates a node having best transmission qualities with respect to other nodes, from among the master node, the first slave node, and the second slave node, as a master node after alteration; and a parameter transfer step of transferring communication parameters among all nodes inclusive of the master node before alteration held by the master node before alteration to the master node after alteration.

According to the above-mentioned aspect, in, the initial step, a node first connected to the communication network is designated as a master node by the first designation step. A node secondly connected to the communication network is designated as a first slave node by the second designation step. Communication parameters between the master node and the first slave node are determined by the first negotiation step. A node thirdly connected to the communication network is designated as a second slave node by the third designation step. Communication parameters between the master node and the second slave node and communication parameters between the first slave node and the second slave node are determined by the second negotiation step. The master node acquires the communication parameters between the first slave node and the second slave node by using the acquisition step. The master node designates a node having best transmission qualities with respect to other nodes, from among the master node, the first slave node, and the second slave node, as a master node after alteration by using the alteration and designation step. Communication parameters among all nodes inclusive of the master node before alteration held by the master node before alteration are transferred to the master node after alteration by the parameter transfer step.

The communication method according to the still another aspect of this invention includes: a master designation step of designating a node that becomes best in transmission quality between the node and other nodes, from among all nodes, as a master node; a grouping step of grouping nodes other than the master node into node groups each having favorable transmission qualities; a sub-master designation step of designating, for each of the grouped node groups, a node having best transmission qualities with respect to other nodes in its own node group and the master node, as a sub-master node; and a logical connection step of logically star-connecting the sub-master node to the master node and logically star-connecting other nodes in its own node group to the sub-master node.

According to the above-mentioned aspect, a node that becomes best in transmission quality between the node and other nodes is designated as a master node from among all nodes by the master designation step. Nodes other than the master node are grouped into node groups each having favorable transmission qualities by the grouping step. For each of the grouped node groups, a node having best transmission qualities with respect to other nodes in its own node group and the master node is designated as a sub-master node by the sub-master designation step. The sub-master node is logically star-connected to the master node, other nodes in its own node group are logically star-connected to the sub-master node by the logical connection step. All nodes are managed in communication as a hierarchical tree structure.

The communication system according to still another aspect of this invention includes: one master node selected from among the nodes; and one or more slave nodes that are nodes other than the master node, the one or more slave nodes logically star-connected to the master node, each of the one or more slave nodes conducting communication with another node via the master node by using communication parameters negotiated with the master node.

According to the above-mentioned aspect, one node is selected as a master node from among the nodes. One or more slave nodes are nodes other than the master node. The one or more slave nodes are logically star-connected to the master node. Each of the one or more slave nodes conducts communication with another node via the master node by using communication parameters negotiated with the master node

The communication system comprises an alteration unit which monitors communication states between the master node and the one or more slave nodes and altering successively communication parameters between the master node and the one or more slave nodes.

Thus, the alteration unit monitors communication states between the master node and the one or more slave nodes and alters successively communication parameters between the master node and the one or more slave nodes.

The communication system according to still another aspect of this invention includes nodes, wherein each node includes a processing unit, and if its own node is designated as a master node logically star-connected to other nodes and if there exists such a node that would become best in transmission quality when logical star connections with other nodes were conducted in response to connection of a new node or a change of a communication state, then the processing unit conducts processing of ordering alteration of the node to a master node and transferring communication parameters among all nodes currently held to a master node after alteration.

According to the above-mentioned aspect, if its own node is designated as a master node logically star-connected to other nodes and if there exists such a node that would become best in transmission quality when logical star connections with other nodes were conducted in response to connection of a new node or a change of a communication state, then the processing unit of each node conducts processing of ordering alteration of the node to a master node and transferring communication parameters among all nodes currently held to a master node after alteration.

The communication system further includes a notice unit which sends a notice to the effect that its own node has been designated as the master node, to other nodes, when its own node is designated as the master node after alteration.

According to this invention, the notice unit of each node sends a notice to the effect that its own node has been designated as the master node, to other nodes, when its own node is designated as the master node after alteration.

The communication system according to still another aspect of this invention includes: a master node that is selected from among all nodes and that is best in transmission quality with respect to other nodes; a sub-master node, for each of node groups grouped as node groups having favorable transmission qualities, having best transmission qualities with respect to other nodes in its own node group and the master node, the sub-master node being logically star-connected to the master node; and slave nodes logically star-connected in each node group to the sub-master node.

According to the above-mentioned aspect, a master node is selected from among all nodes as a node that is best in transmission quality with respect to other nodes. For each of node groups grouped as node groups having favorable transmission qualities, the sub-master node has best transmission qualities with respect to other nodes in its own node group and the master node. The sub-master node is logically star-connected to the master node. The slave nodes are logically star-connected in each node group to the sub-master node.

### BRIEF DESCRIPTION OF THE DRAWINGS

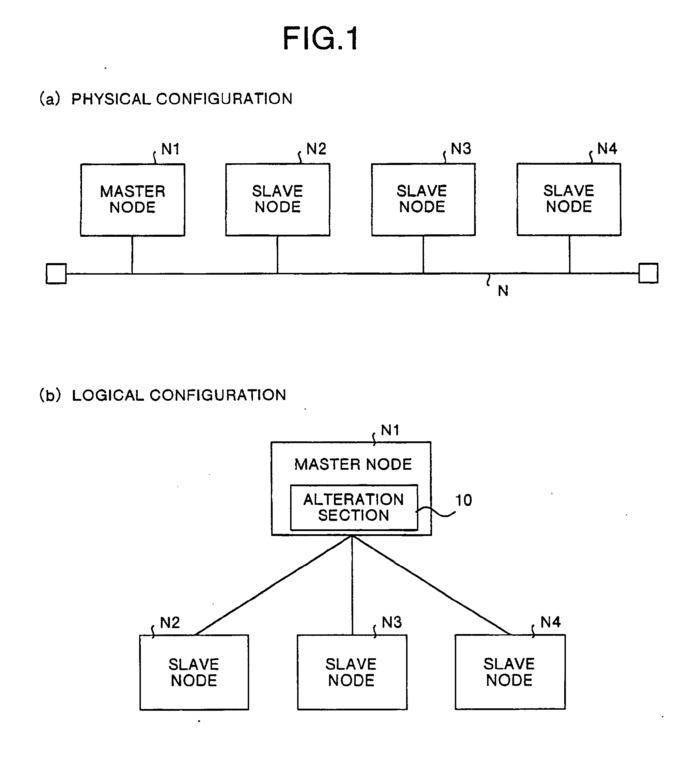

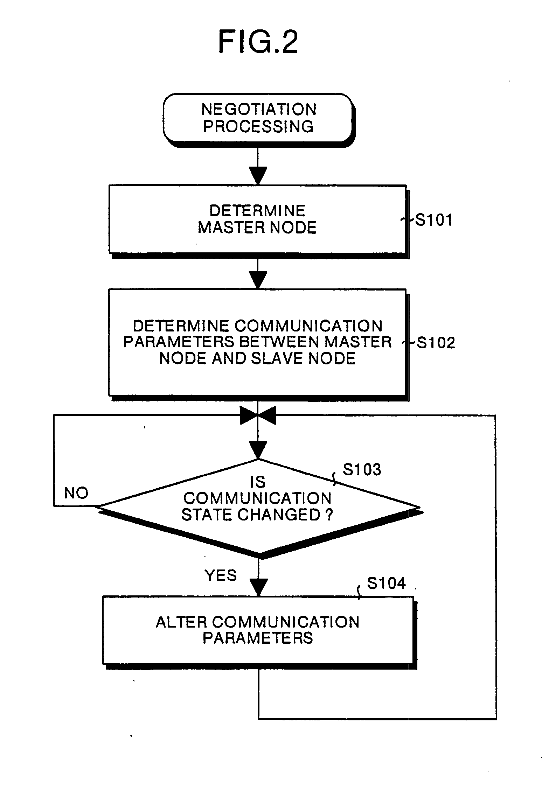

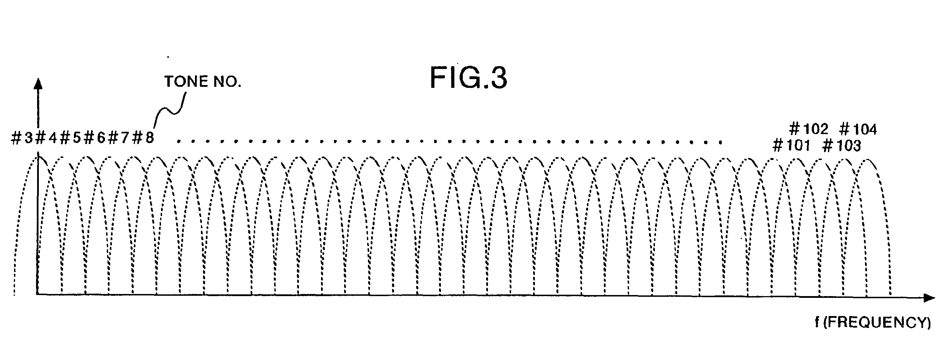

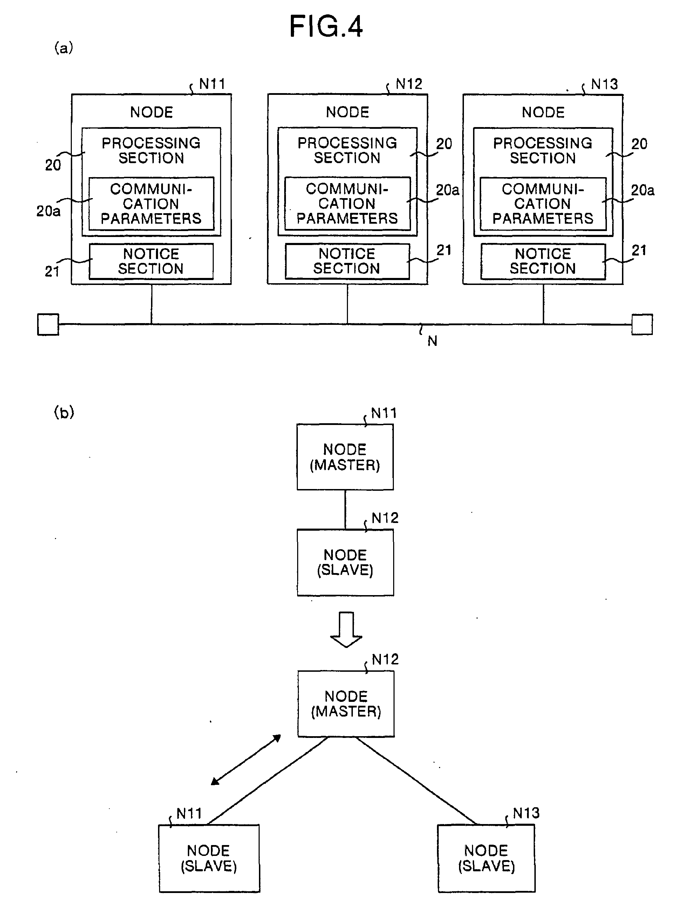

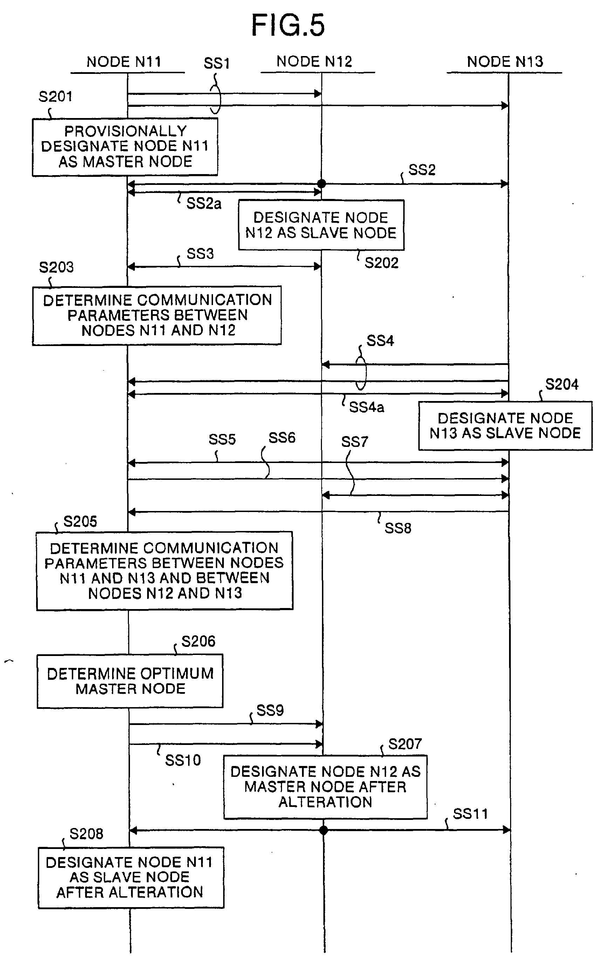

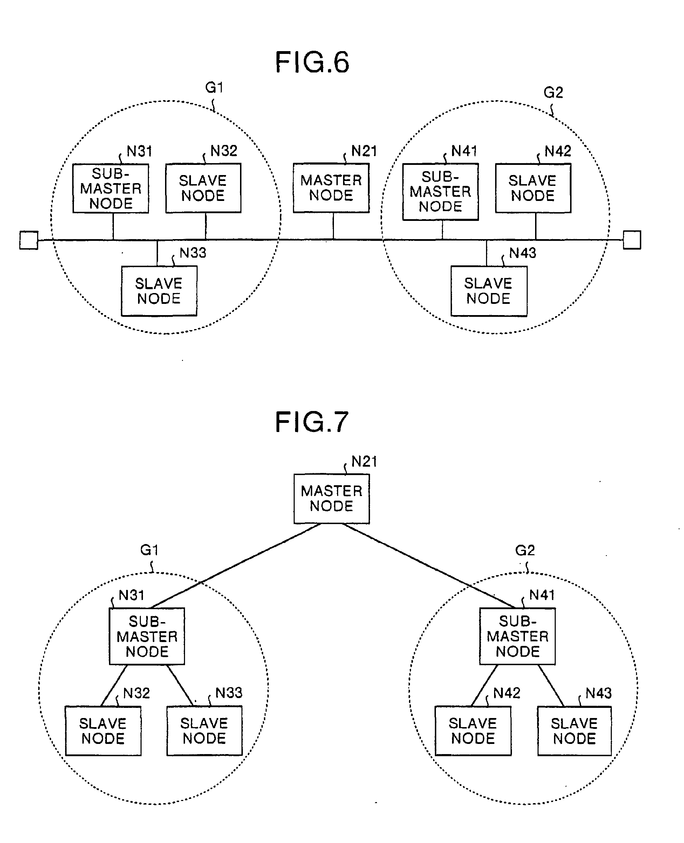

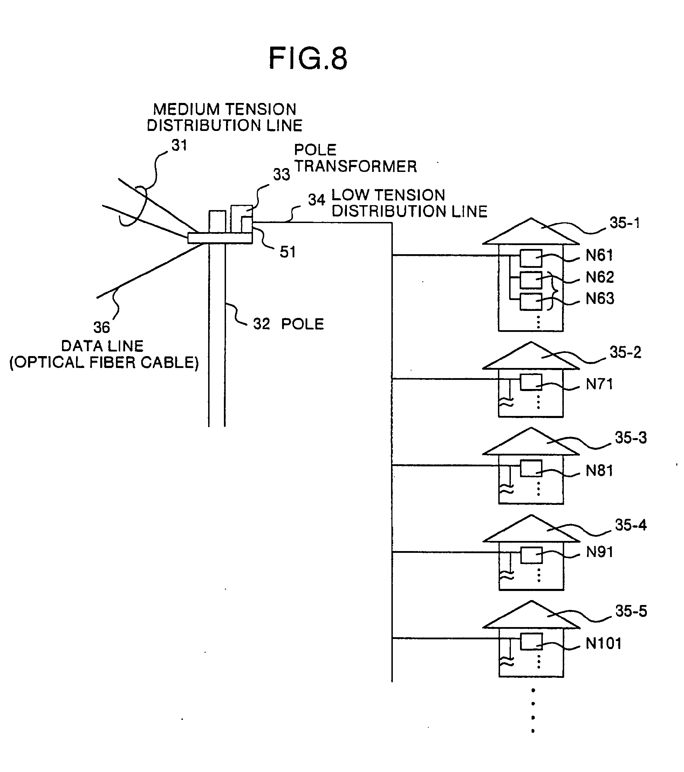

Fig. 1 is a block diagram showing a physical configuration and a logical configuration of a communication system that is a first embodiment of the present invention; Fig. 2 is a flow chart showing a negotiation processing procedure of a communication system shown in Fig. 1; Fig. 3 is a diagram showing an OFDM signal used in a communication system shown in Fig. 1; Fig. 4 is a block diagram showing a physical configuration and a logical configuration of a communication system that is a second embodiment of the present invention; Fig. 5 is a sequence diagram showing a processing procedure for forming a logical configuration shown in Fig. 4; Fig. 6 is a block diagram showing a physical configuration of a communication system that is a third embodiment of the present invention; Fig. 7 is a block diagram showing a logical configuration of a communication system that is a forth embodiment of the present invention; and Fig. 8 is a diagram showing an example of application of a communication system that is the forth embodiment of the present invention.

### BEST MODE FOR CARRYING OUT THE INVENTION

Embodiments of a communication method and a communication system according to the present invention will be described in detail by referring to the accompanying drawing.

### First embodiment:

Fig. 1 is a block diagram showing a physical configuration and a logical configuration of a communication system according to a first embodiment of the present invention. In Fig. 1(a), a plurality of nodes N1 to N4 are connected to a communication line N such as a power line. Among a plurality of nodes, a master node N1 is designated as a master node and nodes N2 to N4 are designated as slave nodes. As shown in Fig. 1(b), there is formed such a logical configuration that the slave nodes N2 to N4 are connected to the master node N1 in a star form, the master node N1 includes an alteration section 10 for dynamically altering communication parameters among the slave nodes N2 to N4.

By referring to Fig. 2, a negotiation processing procedure in this communication system will now be described. First, the master node N1 is designated from among a plurality of nodes N1 to N4 bus-connected to the communication line N. As for the designation of the master node N1, it is desirable that a node having the most favorable transmission quality with respect to other nodes at present is designated. However, an arbitrary node may be designated (step S101).

Thereafter, negotiation for determining communication parameters between the master node N1 and the slave nodes N2 to N4 is conducted (step S102). Communication between the master node N1 and the slave nodes N2 to N4 is conducted on the bases of the determined communication parameters. In this communication system, every communication between nodes is conducted via the master node N1.

Thereafter, it is determined whether the communication state has changed (step S103). If the communication state has changed (YES of step S103), the communication parameters between the master node N1 and the slave nodes N2 to N4 are altered and designated (step S104). The processing proceeds to the step S103 and the above described processing is repeated. The alteration and designation of the communication parameters are executed by conducting negotiation between the master node N1 and the slave nodes N2 to N4.

As a result, it is not necessary to set the communication parameters among all nodes N1 to N4, but it is necessary to set the communication parameters only between the master node N1 and the nodes N2 to N4. Therefore, the negotiation is simplified and the time required for negotiation is also shortened. In general, in the case where there are n nodes, the number of negotiations of the communication parameters becomes n x (n - 1). According to the present embodiment, the number of negotiations between the master node and the slave nodes becomes (n - 1).

Outline of the communication parameters will now be described. Between nodes, OFDM (Orthogonal Frequency Division Multiplexing) signals are used. As shown in Fig. 3, 102 tones: tone #3 to tone # 104 with carrier intervals ΔF= 4.3125 KHz are used. These tones are combined suitably so as to correspond to the transmission state and used, and fast multi-carrier transmission is thus implemented. In particular, it becomes possible to conduct fast data transmission not only sounds and data but also images.

For negotiation between the master node N1 and the slave nodes N2 to N4, the OFDM communication system is used. The transmission rate, equalizer coefficients for adjusting the signal amplitude and phase, a change of redundancy of the error correction system, and communication parameters of power control, not to mention the used tone, are set for each connection between nodes. For example, in a transmission path having high noise, tones exempt from the noise are selected, or error correction codes having high redundancy are selected. Such communication parameters differ according to node pairs, and they are altered as occasion demands according to a dynamical change of the communication state.

In the first embodiment, one of the nodes N1 to N4 connected to a network of bus type is designated as the master node N1, and other nodes are designated as the slave nodes N2 to N4. Every communication between nodes is conducted via the master node N1. Therefore, it is only necessary to conduct negotiation of parameters only between the master node N1 and the slave nodes N2 to N4. Furthermore, the master node N1 conducts negotiation for altering the communication parameters as occasion demands according to the change of the communication state. As a result, favorable communication between nodes can always be conducted.

### Second embodiment:

A second embodiment of the present invention will now be described. In the aforementioned first embodiment, the master node is fixed. In the second embodiment, however, the master node is altered according to the communication state. The reason why the master node is altered is that every communication between nodes is conducted via the master node as described above.

Fig. 4 is a diagram showing a physical configuration and a logical configuration of a communication system that is the second embodiment of the present invention. Specifically, Fig. 4(b) shows a change of the logical configuration in a construction process of the communication system. In Fig. 4(a), nodes N11 to N13 have such a physical configuration as to be connected to a communication line N in the same way as the nodes N1 to N3 shown in Fig. 1. However, any one of the nodes N11 to N13 is designated as the master node, and other nodes are designated as slave nodes. In addition, the master node is altered and designated as occasion demands according to the communication state so as to keep the communication between the master node and the slave nodes favorable.

In the logical configuration of Fig. 4(b), the node N11 connected first to the communication line N is designated as the master node, and the node N12 connected secondly to the communication line N is designated as a slave node for the master node. Thereafter, the node N13 thirdly connected to the communication line N is designated as a slave node. If at least three nodes N11 to N13 are connected, then processing of determining an optimum master node is conducted. If the node N12 is judged to be an optimum master node, then the node N12 is altered to become the master node and the node N11 is altered to become a slave node.

So that any one of the nodes N11 to N13 may become the master node, therefore, each of the nodes N11 to N13 has a processing section 20 for managing communication parameters 20a between nodes and a notice section 21 responsive to designation of its own node as the master node for giving notice to the effect to other nodes . Furthermore, in the first embodiment, the master node N1 conducts only negotiation between the master node N1 and the slave nodes N2 to N4. When each node is connected to the communication line N in the present second embodiment, however, negotiation is conducted between the node and existing nodes and thereby negotiation between all existing nodes is conducted.

A procedure of altering the master node will now be described by referring to a sequence diagram shown in Fig. 5. It is now assumed that nodes are connected to the communication line N in order of node N11→N12→N13. First, when the node N11 is connected to the communication line N, the node N11 sends a response request signal SS1 onto the communication line N. In this case, since a node is connected onto the communication line N, there is no response . Therefore, the node N11 provisionally designates its own node as the master node (step S201).

Thereafter, if the node N12 is connected to the communication line N, then the node N12 sends a response request signal SS2 onto the communication line N. Since in this case there is a response signal SS2a from the node N11, the node N12 is designated as a slave node of the master node N11 (step S202). Thereafter, the master node N11 and the slave node N12 conduct negotiation SS3 of communication parameters, and the communication parameters between the node N11 and the node N12 are determined (step S203).

Thereafter, if the node N13 is connected to the communication line N, then a response request signal SS4 is sent onto the communication line N. In this case, at least a response signal SS4a is returned from the master node N11, and the node N13 is designated as the slave node (step S204). Thereafter, negotiation SS5 of communication parameters between the master node N11 and the slave node N13 is conducted. In addition, if the node N11 sends a negotiation order SS6 between the node N12 and the node N13, then the node N13 and the node N12 conduct negotiation SS7 of communication parameters and sends a result to the master node N11 (SS8). As a result, the master node N11 determines communication parameters between the nodes N11 and N13 and between the nodes N12 and N13 (step S205).

Thereafter, the master node N11 determines an optimum master node, i.e., a node having the most favorable transmission quality with respect to other nodes (step S206). For example, since the node N12 is located in the most center of the node group as shown in Fig. 4(a), the distance between the node N12 and the node N11 and the distance between the node N12 and the node N13 are short. Therefore, the node N12 is determined as a node having the best transmission quality.

If the determination of the optimum master node is conducted, then the master node N11 gives a notice to the effect that the node N12 is the optimum master node to the node N12 (SS9). In addition, the master node N11 transfers information such as the communication parameters held by its own node N11 to the node N12 (SS10). As a result, the node N12 is designated as the master node after alteration (step S207). The node N12 gives a notice to the effect that its own node N12 has become the master node to other nodes N11 and N13 (SS11). Upon receiving the notice, the node N11 and the node N13 thereafter conduct communication via the master node N12. Furthermore, the node N11 is restored to the slave node (step S208).

If thereafter a fourth node is newly connected to the communication line N or the communication state has changed, then the master node conducts processing of determining the optimum master node, and conducts processing of designating the determined optimum master node as the master node in the same way as the above described processing between the nodes N11 and N12. As a result, an optimum master node becomes the master node, and flexible, highly reliable, favorable communication can be conducted.

In the present second embodiment, alteration to and designation of such a master node as to be capable of always keeping favorable communication can be conducted as occasion demands. As a result, flexible, highly reliable, favorable communication can be conducted between nodes.

### Third embodiment:

A third embodiment of the present invention will now be described. Both the first and second embodiments have a logical configuration of star type. However, the third embodiment is provided with a logical configuration of a tree structure as a whole.

Fig. 6 is a block diagram showing a physical configuration of a communication system that is the third embodiment of the present invention. Fig. 7 is a block diagram showing a logical configuration of the communication system shown in Fig. 6. In Fig. 6, this communication system first determines a master node N21. The master node N21 is a node having the most favorable transmission quality with respect to other nodes N31 to N33 and N41 to N43. The nodes N31 to N33 and the nodes N41 to N43 are groups each having a favorable transmission quality. In each group, a node having the most favorable transmission quality with respect to other nodes and the master node is designated as a sub-master node. That is, the nodes N31 and N41 are designated as sub-master nodes.

As a result, the logical configuration shown in Fig. 7 is formed. That is, the sub-master nodes N31 and N41 are connected to the master node N21 logically in a star form. The slave nodes N32 and N33 and the slave nodes N42 and N43 in respective groups are respectively connected to the master nodes N31 and N41 logically in star forms.

When a slave node conducts communication with a node included in its own group, the communication is conducted via only its own sub-master. When the slave node conducts communication with a node included in another group inclusive of the master node N21, the communication is conducted via its own sub-master node and the master node N21. Therefore, the master node N21 conducts negotiation for setting communication parameters with the sub-master nodes N31 and N41. Each of the sub-master nodes N31 and N41 conducts negotiation for setting communication parameters with slave nodes included in its own group. Therefore, only minimum negotiation is required. By the way, the sub-master node may be altered and designated in each group as occasion demands in the same way as the second embodiment.

In order to determine whether communication is communication between nodes in its own group or communication with another group, the master node N21 and the sub-master nodes N31 and N41 manage addresses of nodes of the lower layer. If destination is an address managed by its own node as a result of the address management, then processing such as relay corresponding to the address is conducted. If the destination is not an address managed by its own node, the communication is abandoned.

Fig. 8 is a diagram showing an example of a communication system to which the third embodiment of the present invention has been applied. In Fig. 8, power of a medium tension distribution line 31 is supplied to homes 35-1 to 35-5 via a pole transformer 33 installed on a pole 32 and a low tension distribution line 34. The low tension distribution line 34 electrically connects the homes 35-1 to 35-5 to the pole transformer 33.

Therefore, a master node N31 is installed near the pole transformer 33. The homes 35-1 to 35-5 are set as respective groups. Sub-master nodes N61, N71, N81, N91 and N101 are set in respective groups. Slave nodes are set in respective groups (homes) . For example, in the home 35-1, nodes N62 and N63 are designated as slave nodes for the sub-master node N61. By providing such a logical hierarchical structure, the number of negotiations for a large number of nodes can be reduced. By the way, the nodes can be connected to an external communication network easily by connecting the master node N51 installed near the pole transformer 33 to a data line 36 such as an optical fiber cable.

Even if the number of nodes is increased, the present third embodiment becomes logically a hierarchical tree structure, and processing such as negotiation is also distributed. As a result, efficient communication is implemented.

According to this invention, any one of the nodes is designated as a master node and other nodes are designated as slave nodes, and a logical star connection is formed by the designation step as heretofore described. Communication parameters between the master node and respective slave nodes are determined by the determination step. At the communication step, communication between slave nodes is conducted via the master node by using communication parameters determined by the determination step. As a result, it is only necessary to conduct negotiation for setting the communication parameters between star-connected nodes . Thus, there is brought about an effect that the negotiation processing is simplified and the processing time can be shortened.

According to the next invention, the master node monitors communication states between the master node and at least one of the slave nodes and alters successively communication parameters between the master node and the at least one of the slave nodes by using the alteration step. As a result, there is brought about an effect that favorable inter-node communication can be maintained.

According to the next invention, a node that would become best in transmission quality when a logical star connection with other nodes were conducted is designated as a master node based on transmission qualities between nodes, other nodes are designated as slave nodes, and the nodes are star-connected logically, by the initial step. If there exists such a node that would become best in transmission quality when logical star connections with other nodes were conducted in response to connection of a new node or a change of a communication state, then the node is altered to a master node and a current master node is altered to a slave node by the alteration step. As a result, there is brought about an effect that highly reliable inter-node communication can be conducted continuously.

According to the next invention, communication parameters among all nodes inclusive of the current master node held by the current master node are transferred by the transfer step of the alteration step. As a result, there is brought about an effect that the management load caused by alteration of the master node can be reduced and continuous management can be conducted.

According to the next invention, the master node after alteration sends a notice to the effect that its own master node has been altered to the master node, to other nodes by using the notice step of the alteration step. As a result, there is brought about an effect that favorable communication can be conducted continuously without confusion.

According to the next invention, in the initial step, a node first connected to the communication network is designated as a master node by the first designation.step. A node secondly connected to the communication network is designated as a first slave node by the second designation step. Communication parameters between the master node and the first slave node are determined by the first negotiation step. A node thirdly connected to the communication network is designated as a second slave node by the third designation step. Communication parameters between the master node and the second slave node and communication parameters between the first slave node and the second slave node are determined by the second negotiation step. The master node acquires the communication parameters between the first slave node and the second slave node by using the acquisition step. The master node designates a node having best transmission qualities with respect to other nodes, from among the master node, the first slave node, and the second slave node, as a master node after alteration by using the alteration and designation step. Communication parameters among all nodes inclusive of the master node before alteration held by the master node before alteration are transferred to the master node after alteration by the parameter transfer step. As a result, there is brought about an effect that communication processing can be conducted positively until three or more nodes are connected.

According to the next invention, a node that becomes best in transmission quality between the node and other nodes is designated as a master node from among all nodes by the master designation step. Nodes other than the master node are grouped into node groups each having favorable transmission qualities by the grouping step. For each of the grouped node groups, a node having best transmission qualities with respect to other nodes in its own node group and the master node is designated as a sub-master node by the sub-master designation step. The sub-master node is logically star-connected to the master node, other nodes in its own node group are logically star-connected to the sub-master node by the logical connection step. All nodes are managed in communication as a hierarchical tree structure . As a result, there is brought about an effect that efficient communication can be implemented even if the number of nodes is increased.

According to the next invention, one node is selected as a master node from among the nodes. One or more slave nodes are nodes other than the master node. The one or more slave nodes are logically star-connected to the master node. Each of the one or more slave nodes conducts communication with another node via the master node by using communication parameters negotiated with the master node. As a result, it is only necessary to conduct negotiation for setting the communication parameters between star-connected nodes. Thus, there is brought about an effect that the negotiation processing is simplified and the processing time can be shortened.

According to the next invention, the alteration unit of the master node monitors communication states between the master node and the one or more slave nodes and alters successively communication parameters between the master node and the one or more slave nodes. As a result, there is brought about an effect that favorable inter-node communication can be maintained.

According to the next invention, if its own node is designated as a master node logically star-connected to other nodes and if there exists such a node that would become best in transmission quality when logical star connections with other nodes were conducted in response to connection of a new node or a change of a communication state, then the processing unit of each node conducts processing of ordering alteration of the node to a master node and transferring communication parameters among all nodes currently held to a master node after alteration. As aresult, there is brought about an effect that highly reliable inter-node communication can be conducted continuously.

According to the next invention, the notice unit of each node sends a notice to the effect that its own node has been designated as the master node, to other nodes, when its own node is designated as the master node after alteration. As a result, there is brought about an effect that favorable communication can be conducted continuously without confusion.

According to the next invention, a master node is selected from among all nodes as a node that is best in transmission quality with respect to other nodes. For each of node groups grouped as node groups having favorable transmission qualities, the sub-master node has best transmission qualities with respect to other nodes in its own node group and the master node. The sub-master node is logically star-connected to the master node. The slave nodes are logically star-connected in each node group to the sub-master node. As a result, there is brought about an effect that efficient communication can be implemented even if the number of nodes is increased.

### INDUSTRIAL APPLICABILITY

As heretofore described, a communication method and a communication system according to the present invention are suitable to such a communication system that the transmission quality differs depending upon the position where a node is connected, such as such a communication system that communication devices (nodes) are connected to a communication line such as a power line.

## Claims

1. A communication method for conducting communication among nodes that form a communication network of bus type by using set communication parameters, the communication method comprising:
a designation step of designating any one of said nodes as a master node, designating other nodes as slave nodes, and forming a logical star connection;
a determination step of determining communication parameters between said master node and respective slave nodes; and
a communication step of conducting communication between said slave nodes via said master node by using communication parameters determined in the determination step.

2. The communication method according to claim 1, wherein the communication method further comprising: an alteration step in which said master node monitors communication states between said master node and at least one of said slave nodes and alters successively communication parameters between said master node and said at least one of said slave nodes.

3. A communication method for conducting communication among nodes that form a communication network of bus type by using set communication parameters, the communication method comprising:
an initial step of designating a node that would become best in transmission quality when a logical star connection with other nodes were conducted, as a master node based on transmission qualities between nodes, designating other nodes as slave nodes, and star-connecting the nodes logically; and
an alteration step, responsive to existence of such a node that would become best in transmission quality when logical star connections with other nodes were conducted in response to connection of a new node or a change of a communication state, of altering said node to a master node and altering a current master node to a slave node.

4. The communication method according to claim 3, wherein the alteration step comprises a transfer step of transferring communication parameters among all nodes inclusive of the current master node held by the current master node to a master node after alteration.

5. The communication method according to claim 4, wherein the alteration step comprises a notice step in which the master node after alteration sends a notice to the effect that its own master node has been altered to the master node, to other nodes.

6. The communication method according to claim 3, wherein the initial step comprises:
a first designation step of designating a node first connected to said communication network as a master node;
a second designation step of designating a node secondly connected to said communication network as a first slave node;
a first negotiation step of determining communication parameters between said master node and said first slave node;
a third designation step of designating a node thirdly connected to said communication network as a second slave node;
a second negotiation step of determining communication parameters between said master node and said second slave node and communication parameters between said first slave node and said second slave node;
an acquisition step in which said master node acquires the communication parameters between said first slave node and said second slave node;
an alteration and designation step in which said master node designates a node having best transmission qualities with respect to other nodes, from among said master node, said first slave node, and said second slave node, as a master node after alteration; and
a parameter transfer step of transferring communication parameters among all nodes inclusive of the master node before alteration held by the master node before alteration to said master node after alteration.

7. A communication method for conducting communication among nodes that form a communication network of bus type by using set communication parameters, the communication method comprising:
a master designation step of designating a node that becomes best in transmission quality between said node and other nodes, from among all nodes, as a master node;
a grouping step of grouping nodes other than said master node into node groups each having favorable transmission qualities;
a sub-master designation step of designating, for each of said grouped node groups, a node having best transmission qualities with respect to other nodes in its own node group and said master node, as a sub-master node; and
a logical connection step of logically star-connecting said sub-master node to said master node and logically star-connecting other nodes in its own node group to said sub-master node.

8. A communication system for conducting communication among nodes that form a communication network of bus type by using set communication parameters, said communication system comprising:
one master node selected from among said nodes; and
one or more slave nodes that are nodes other than said master node, said one or more slave nodes logically star-connected to said master node, each of said one or more slave nodes conducting communication with another node via said master node by using communication parameters negotiated with said master node.

9. The communication system according to claim 8, wherein said master node comprises an alteration unit which monitors communication states between said master node and said one or more slave nodes and altering successively communication parameters between said master node and said one or more slave nodes.

10. The communication system for conducting communication among nodes that form a communication network of bus type by using set communication parameters, wherein each node comprises a processing unit, and
if its own node is designated as a master node logically star-connected to other nodes and if there exists such a node that would become best in transmission quality when logical star connections with other nodes were conducted in response to connection of a new node or a change of a communication state, then said processing unit conducts processing of ordering alteration of said node to a master node and transferring communication parameters among all nodes currently held to a master node after alteration.

11. The communication system according to claim 10, wherein each node further comprises a notice unit which sends a notice to the effect that its own node has been designated as the master node, to other nodes, when its own node is designated as said master node after alteration.

12. A communication system for conducting communication among nodes that form a communication network of bus type by using set communication parameters, said communication system comprising:
a master node that is selected from among all nodes and that is best in transmission quality with respect to other nodes;
a sub-master node, for each of node groups grouped as node groups having favorable transmission qualities, having best transmission qualities with respect to other nodes in its own node group and said master node, said sub-master node being logically star-connected to said master node; and
slave nodes logically star-connected in each node group to said sub-master node.
